# EUROPÄISCHE PATENTSCHRIFT

(11) **EP 3 140 077 B1**
(45) Veröffentlichungstag und Bekanntmachung des Hinweises auf die Patenterteilung: **05.05.2021**
(21) Anmeldenummer: 15723662.1
(22) Anmeldetag: 05.05.2015
(51) Int. Cl.: B23Q 7/04, B23Q 7/14

(54) **WERKZEUGMASCHINENSYSTEM UND VERFAHREN ZUM BETREIBEN EINES WERKZEUGMASCHINENSYSTEMS**
MACHINE TOOL SYSTEM AND METHOD FOR OPERATING A MACHINE TOOL SYSTEM
SYSTÈME DE MACHINE-OUTIL ET PROCÉDÉ POUR FAIRE FONCTIONNER UN SYSTÈME DE MACHINE-OUTIL

(30) Priorität: 09.05.2014 DE 102014106572
(43) Veröffentlichungstag der Anmeldung: 15.03.2017
(73) Patentinhaber: MAG IAS GmbH, 73054 Eislingen (DE)
(72) Erfinder: BRUDER, Hubert, 77704 Oberkirch (DE); HAUG, Ralf, 73326 Deggingen (DE)
(74) Vertreter: Hoeger, Stellrecht & Partner Patentanwälte mbB
(86) Internationale Anmeldenummer: PCT/EP2015/059817
(87) Internationale Veröffentlichungsnummer: WO 2015/169790

(56) Entgegenhaltungen:
- EP-A1- 1 321 224
- EP-A1- 1 787 750
- WO-A1-2008/089751
- DE-A1-102004 030 150

## Beschreibung

Die Erfindung betrifft ein Werkzeugmaschinensystem, umfassend mindestens eine Werkzeugmaschine zur Bearbeitung von Werkstücken, mit einer Werkstückhalteeinrichtung, wobei bei einer Werkstückbearbeitung ein oder mehrere Werkstücke über einen Adapter an der Werkstückhalteeinrichtung gehalten sind.

Die Erfindung betrifft ferner ein Verfahren zum Betreiben eines Werkzeugmaschinensystems, welches mindestens eine Werkzeugmaschine umfasst, wobei bei einer Werkstückbearbeitung an der mindestens einen Werkzeugmaschine ein oder mehrere Werkstücke über einen Adapter an einer Werkstückhalteeinrichtung gehalten werden.

Bei Werkzeugmaschinensystemen, bei denen Werkstücke nicht direkt an einer Werkstückhalteeinrichtung einer Werkzeugmaschine gehalten werden, sondern mittels eines Adapters, lassen sich minimierte Umrüstzeiten realisieren, wenn unterschiedliche Werkstücke bearbeitet werden sollen. Durch Verwendung geeigneter Adapter kann die gleiche Werkstückhalteeinrichtung ohne Umbau oder dergleichen für unterschiedliche Werkstücke verwendet werden.

Die EP 1 787 750 A1 offenbart fein Werkzeugmaschinensystem nach dem Oberbegriff des Anspruchs 1 und ein Verfahren zum Rüsten eines Werkstücks für die Herstellung eines strömungsleitenden Bauteils, bei dem das Werkstück außerhalb einer Werkzeugmaschine in eine Werkstückspannvorrichtung eingespannt wird, um nachfolgend der Werkzeugmaschine zugeführt zu werden, in der es durch Fräsen formgebend bearbeitet wird.

Aus der DE 10 2008 009 995 A1 ist ein Verfahren zum Transportieren von Werkstücken zwischen mehreren Bearbeitungsstellen bekannt, wobei an der Bearbeitungsstelle die Werkstücke von einer Handhabungseinrichtung mittels einer Greifeinrichtung gespannt und gehandhabt werden. Die Werkstücke bleiben zum Transport mit ihrer Greifeinrichtung verbunden und werden beide zusammen transportiert.

Aus der US 4,685,850 ist ein Werkzeug- und ein Werkstück-Wechselsystem bekannt.

Der Erfindung liegt die Aufgabe zugrunde, ein Werkzeugmaschinensystem der eingangs genannten Art und ein Verfahren der eingangs genannten Art bereitzustellen, welches minimierte Systemtaktzeiten aufweist.

Diese Aufgabe wird bei dem eingangs genannten Werkzeugmaschinensystem erfindungsgemäß dadurch gelöst, dass eine Positioniereinrichtung vorgesehen ist, welche Werkstückrohlinge an Adaptern positioniert, eine Adapter-Lade-Transporteinrichtung vorgesehen ist, mit einer Adapter-Greifeinrichtung, welche an Adaptern angreift, wobei die Adapter-Lade-Transporteinrichtung mit Werkstückrohlingen versehene Adapter von der Positioniereinrichtung zu der mindestens einen Werkzeugmaschine bringt, die mindestens eine Werkzeugmaschine belädt und mit einem oder mehreren bearbeiteten Werkstücken versehene Adapter von der mindestens einen Werkzeugmaschine entlädt, und eine Werkstück-Transporteinrichtung vorgesehen ist mit einer Werkstück-Greifeinrichtung, welche an Werkstücken angreift, wobei die Werkstück-Transporteinrichtung bearbeitete Werkstücke nach Entladung an der mindestens einen Werkzeugmaschine durch die Adapter-Lade-Transporteinrichtung von der Adapter-Lade-Transporteinrichtung übernimmt und abführt, und dass die Werkstückhalteeinrichtung ein Lösesystem zum Lösen einer Spannung von einem oder mehreren bearbeiteten Werkstücken an einem Adapter umfasst und/oder ein Spannsystem zum Spannen eines oder mehrerer Werkstücke an dem Adapter umfasst, wobei bearbeitete Werkstücke, welche an Adaptern positioniert sind, innerhalb der mindestens einen Werkzeugmaschine von dem Adapter entspannbar sind und/oder Werkstücke, welche an Adaptern positioniert sind, innerhalb der Werkzeugmaschine an den Adaptern spannbar sind.

Bei der erfindungsgemäßen Lösung wird gemäß einem "Shake-Hand-Prinzip" ein bearbeitetes Werkstück nach Entladung der mindestens einen Werkzeugmaschine von der Adapter-Lade-Transporteinrichtung an die Werkstück-Transporteinrichtung übergeben.

Das Beladen der mindestens einen Werkzeugmaschine und das Entladen lassen sich auf effektive Weise durchführen. Die Übergabe an die Werkstück-Greifeinrichtung von bearbeiteten Werkstücken kann außerhalb der mindestens einen Werkzeugmaschine erfolgen. Es lassen sich so insgesamt Systemtaktzeiten und Rüstzeiten minimieren.

Ein "Umbau" der mindestens einen Werkzeugmaschine kann minimal gehalten werden. Es lassen sich dadurch beispielsweise auch Fünf-Achs-Bearbeitungsvorgänge an der mindestens einen Werkzeugmaschine durchführen.

Das erfindungsgemäße Werkzeugmaschinensystem ist flexibel einsetzbar und anpassbar.

Günstig ist es, wenn die Werkstück-Transporteinrichtung bearbeitete Werkstücke außerhalb der mindestens einen Werkzeugmaschine von der Adapter-Lade-Transporteinrichtung übernimmt. Dadurch lassen sich kurze Systemtaktzeiten erreichen.

Bei einem Ausführungsbeispiel umfasst die Adapter-Greifeinrichtung mindestens zwei Greifer. Dadurch lassen sich kurze Systemtaktzeiten realisieren. Beispielsweise kann ein Greifer einen mit einem oder mehreren Werkstückrohlingen beladenen Adapter halten und der andere Greifer kann einen "leeren" Adapter halten.

Bei einem konstruktiv einfachen Ausführungsbeispiel ist vorgesehen, dass die mindestens zwei Greifer miteinander verbunden sind und gemeinsam zumindest in einer Bewegungsachse bewegt sind. Die Verbindung kann dabei mechanisch sein oder es kann sich um eine softwaremäßige Verbindung in einer Steuerung handeln.

Günstig ist es, wenn ein Greifer der Adapter-Greifeinrichtung eine Linearbeweglichkeit in einer ersten Richtung aufweist und in einer zweiten Richtung quer zu der ersten Richtung aufweist. Es kann ferner eine Linearbeweglichkeit in einer dritten Richtung quer zur ersten Richtung und quer zur zweiten Richtung vorgesehen sein. Dadurch lässt sich auf effektive Weise die mindestens eine Werkzeugmaschine anfahren und es lässt sich die Positioniereinrichtung anfahren. Es lässt sich auf effektive Weise eine Beladung der mindestens einen Werkzeugmaschine erreichen und eine Entladung der mindestens einen Werkzeugmaschine. Ferner lässt sich auf einfache Weise eine Übergabe an die Werkstück-Greifeinrichtung realisieren.

Bei einem Ausführungsbeispiel ist die erste Achse bezogen auf die Schwerkraftrichtung eine horizontale Richtung. Es ist dann ferner günstig, wenn die zweite Richtung bezogen auf die Schwerkraftrichtung eine vertikale Richtung ist. Dadurch lässt sich das Werkzeugmaschinensystem auf einfache und kompakte Weise realisieren.

Es ist günstig, wenn die Werkstück-Greifeinrichtung der Werkstück-Transporteinrichtung mindestens einen Greifer umfasst. Dieser Greifer, welcher an einem Werkstück angreift, kann dann auf effektive Weise ein Werkstück von der Adapter-Greifeinrichtung übernehmen und dabei auch von dem entsprechenden Adapter abheben.

Es ist ebenfalls günstig, wenn die Positioniereinrichtung eine Werkstück-Greifeinrichtung mit mindestens einem Greifer umfasst, welcher an Werkstückrohlingen angreift. Über diesen mindestens einen Greifer können Werkstückrohlinge beispielsweise von einem Zuführband entnommen werden und an der Positioniereinrichtung auf Adaptern abgelegt werden.

Es ist insbesondere günstig, wenn ein Greifer der Werkstück-Transporteinrichtung und/oder der Positioniereinrichtung in einer ersten Richtung und einer zweiten Richtung quer zur ersten Richtung linear verschieblich ist. Dadurch ergibt sich eine entsprechende Beweglichkeit, um Werkstückrohlinge an der Positioniereinrichtung zu positionieren beziehungsweise bearbeitete Werkstücke beispielsweise an einem Abführband zu positionieren.

Es ist ferner günstig, wenn ein Greifer der Werkstück-Transporteinrichtung und/oder der Positioniereinrichtung um eine erste Drehachse schwenkbar oder drehbar ist. Dadurch lässt sich eine entsprechende Ausrichtung beziehungsweise Positionierung von Werkstücken (vor beziehungsweise nach der Bearbeitung) erreichen.

Aus dem gleichen Grund ist es günstig, wenn der Greifer der Werkstück-Transporteinrichtung und/oder der Positioniereinrichtung um eine zweite Drehachse schwenkbar oder drehbar ist, welche verschieden von der ersten Drehachse und insbesondere quer zu dieser orientiert ist. Durch die Drehbarkeit beziehungsweise Schwenkbarkeit um die erste Drehachse und/oder zweite Drehachse kann ein Werkstück (ein Werkstückrohling beziehungsweise bearbeitetes Werkstück) gegriffen werden und dann entsprechend transportiert werden und bei der Entnahme beziehungsweise Ablage kann die geeignete Ausrichtung erfolgen.

Insbesondere weist die Adapter-Greifeinrichtung eine erste Bewegungsachse auf, welche entlang einer Abstandsrichtung zwischen der Positioniereinrichtung und der mindestens einen Werkzeugmaschine liegt. Dadurch lassen sich Adapter, welche mit einem oder mehreren Werkstücken beladen sind, von der Positioniereinrichtung zu der mindestens einen Werkzeugmaschine bringen. Ferner lassen sich "leere" Adapter, welche mittels der Werkstück-Greifeinrichtung der Werkstück-Transporteinrichtung entladen wurden, wieder der Positioniereinrichtung zur neuen Beladung zuführen.

Es ist ferner günstig, wenn die Werkstück-Greifeinrichtung der Werkstück-Transporteinrichtung eine zweite Bewegungsachse aufweist, welche entlang einer Abstandsrichtung zwischen der mindestens einen Werkzeugmaschine und einer Abführungseinrichtung für bearbeitete Werkstücke liegt. Dadurch lassen sich bearbeitete Werkstücke auf effektive Weise abführen. Ferner lässt sich dadurch auf einfache Weise eine Übergabe von bearbeiteten Werkstücken von der Adapter-Lade-Transporteinrichtung zu der Werkstück-Transporteinrichtung realisieren.

Es ist dann günstig, wenn die zweite Bewegungsachse parallel zu einer ersten Bewegungsachse der Adapter-Greifeinrichtung liegt. Dadurch lässt sich das erfindungsgemäße Werkzeugmaschinensystem auf kompakte Weise und konstruktiv günstige Weise realisieren.

Die Werkstückhalteeinrichtung ist so ausgebildet, dass bearbeitete Werkstücke, welche an Adaptern positioniert sind, innerhalb der mindestens einen Werkzeugmaschine von dem Adapter entspannbar sind und/oder Werkstücke, welche an Adaptern positioniert sind, innerhalb der Werkzeugmaschine an Adaptern spannbar sind. Dadurch lässt sich unter geringem konstruktivem Aufwand ein erfindungsgemäßes Werkzeugmaschinensystem realisieren. Die Adapter-Greifeinrichtung beziehungsweise die Werkstück-Greifeinrichtung lässt sich mit konstruktiv geringem Aufwand realisieren, da an diesen keine Entspannung von Werkstücken von Adaptern beziehungsweise Spannung von Werkstücken an Adaptern vorgesehen werden muss.

Es ist ferner günstig, wenn die Werkstück-Greifeinrichtung der Werkstück-Transporteinrichtung einen Bewegungsraum aufweist, welcher in einem Bewegungsraum der Adapter-Greifeinrichtung liegt und bearbeitete Werkstücke von der Adapter-Greifeinrichtung an die Werkstück-Greifeinrichtung zu übergeben. Durch überlappende Bewegungsräume lässt sich eine Werkstückübergabe nach dem "Shake-Hand-Prinzip" auf einfache Weise realisieren.

Bei einem Ausführungsbeispiel ist eine Mehrzahl von Werkzeugmaschinen vorgesehen. In den Werkzeugmaschinen erfolgt beispielsweise gleichzeitig eine Bearbeitung einer Mehrzahl von Werkstücken, wobei in unterschiedlichen Werkzeugmaschinen grundsätzlich unterschiedliche Bearbeitungsvorgänge stattfinden können oder gleiche Bearbeitungsvorgänge und insbesondere eine Parallelbearbeitung stattfinden kann. Durch die Adapter-Lade-Transporteinrichtung und durch die Werkstück-Transporteinrichtung lassen sich diese Werkzeugmaschinen anfahren, beladen und entladen und es lassen sich bearbeitete Werkstücke abführen.

Es ist günstig, wenn ein Hydrauliksystem für die Werkzeugmaschinen vorgesehen ist. Dieses Hydrauliksystem dient insbesondere zum Spannen beziehungsweise Lösen von Werkstücken an Adaptern innerhalb von Werkzeugmaschinen. Durch ein gemeinsames Hydrauliksystem für die Werkzeugmaschinen lässt sich der konstruktive Aufwand gering halten.

Insbesondere ist ein gemeinsames Hydraulikaggregat und insbesondere gemeinsamer Hydraulikölvorrat für die Werkzeugmaschinen der Mehrzahl von Werkzeugmaschinen vorgesehen. Dadurch lässt sich der konstruktive Aufwand gering halten.

Insbesondere sind Werkstückhalteeinrichtungen der Werkzeugmaschinen an das Hydrauliksystem angeschlossen. Dadurch lässt sich an den Werkstückhalteeinrichtungen innerhalb einer Werkzeugmaschine ein an einem Adapter eingespanntes Werkstück lösen oder bei einem Ausführungsbeispiel lässt sich ein an einem Adapter angeordnetes Werkstück mit diesem verspannen. Dadurch ist der Aufwand zum Lösen beziehungsweise zum Spannen außerhalb der mindestens einen Werkzeugmaschine verringert.

Es ist ferner günstig, wenn eine Speichereinrichtung für Adapter vorgesehen ist, welche Adapter der Positioniereinrichtung bereitstellt. Es kann so eine effektive Positionierung und insbesondere auch Einspannung von Werkstücken an Adaptern erfolgen.

Ein kompakt aufgebautes Werkzeugmaschinensystem lässt sich realisieren, wenn die Speichereinrichtung zwischen der Positioniereinrichtung und der mindestens einen Werkzeugmaschine angeordnet ist. Dadurch lassen sich auch die Verfahrwege für die Adapter-Lade-Transporteinrichtung minimieren, um beispielsweise leere (unbeladene) Adapter der Positioniereinrichtung bereitzustellen.

Insbesondere ist die Speichereinrichtung durch die Adapter-Lade-Transporteinrichtung anfahrbar, um einen effektiven Transport von beladenen und unbeladenen Adaptern zu erreichen.

Es ist günstig, wenn eine Reinigungseinrichtung für Adapter vorgesehen ist. Es lassen sich dann Adapter nach einer Werkstückbearbeitung reinigen und beispielsweise spülen.

Insbesondere ist die Reinigungseinrichtung durch die Adapter-Lade-Transporteinrichtung anfahrbar. Es ergeben sich so kurze Systemtaktzeiten.

Es ist ferner günstig, wenn eine Prüfeinrichtung für bearbeitete Werkstücke und/oder eine Ausschleuseinrichtung für bearbeitete Werkstücke vorgesehen ist. Es lassen sich dadurch beispielsweise statistisch ausgewählte bearbeitete Werkstücke auf Fehlerhaftigkeit prüfen und gegebenenfalls vor der Weiterbearbeitung ausschließen.

Insbesondere ist dann die Prüfeinrichtung und/oder die Ausschleuseinrichtung durch die Werkstück-Transporteinrichtung anfahrbar. Dadurch ergeben sich kurze Systemtaktzeiten.

Die eingangs genannte Aufgabe wird bei dem eingangs genannten Verfahren erfindungsgemäß dadurch gelöst, dass das Verfahren folgende Schritte umfasst: Greifen eines mit einem oder mehreren Werkstückrohlingen versehenen Adapters durch eine Adapter-Greifeinrichtung; Zuführen des Adapters zu der mindestens einen Werkzeugmaschine durch die Adapter-Greifeinrichtung; Beladen der mindestens einen Werkzeugmaschine mit dem Adapter durch die Adapter-Greifeinrichtung und nach der Werkstückbearbeitung Entladung der mindestens einen Werkzeugmaschine durch Greifen des Adapters durch die Adapter-Greifeinrichtung, wobei das Werkstück oder die Werkstücke nach der Bearbeitung innerhalb der mindestens einen Werkzeugmaschine von dem Adapter entspannt werden, Greifen des oder der bearbeiteten Werkstücke, welche an dem Adapter sitzen, wobei der Adapter durch die Adapter-Greifeinrichtung gehalten wird, von einer Werkstück-Greifeinrichtung; Übernahme des oder der Werkstücke von der Adapter-Greifeinrichtung; und Abführung des Werkstücks oder der Werkstücke mit der Werkstück-Greifeinrichtung.

Das erfindungsgemäße Verfahren weist die bereits im Zusammenhang mit dem erfindungsgemäßen Werkzeugmaschinensystem erläuterten Vorteile auf. Das erfindungsgemäße Verfahren ist an dem erfindungsgemäßen Werkzeugmaschinensystem durchführbar beziehungsweise das erfindungsgemäße Werkzeugmaschinensystem lässt sich mit dem erfindungsgemäßen Verfahren betreiben.

Insbesondere übernimmt die Werkstück-Greifeinrichtung das oder die bearbeiteten Werkstücke außerhalb der mindestens einen Werkzeugmaschine. Dadurch wird durch den Werkstücktransport außerhalb der Werkzeugmaschine der Bearbeitungsvorgang, welcher durch die mindestens eine Werkzeugmaschine durchführbar ist, nicht eingeschränkt. Beispielsweise sind Fünf-Achs-Bearbeitungsvorgänge durch die mindestens eine Werkzeugmaschine durchführbar.

Das Werkstück oder die Werkstücke werden nach der Bearbeitung innerhalb der mindestens einen Werkzeugmaschine von dem Adapter entspannt. Dadurch lässt sich die Werkstück-Greifeinrichtung und die Adapter-Greifeinrichtung mit geringem konstruktivem Aufwand ausbilden.

Die Werkstückhalteeinrichtung der mindestens einen Werkzeugmaschine umfasst ein Lösesystem zum Lösen einer Spannung von einem oder mehreren bearbeiteten Werkstücken an einem Adapter und/oder umfasst ein Spannsystem zum Spannen eines oder mehrerer Werkstücke und insbesondere Werkstückrohlinge an einem Adapter. Dadurch lässt sich ein Lösen beziehungsweise Spannen innerhalb der mindestens einen Werkzeugmaschine erreichen. Es kann dabei vorgesehen sein, dass das Lösen (Entspannen) innerhalb der mindestens einen Werkzeugmaschine erfolgt und das Spannen eines Werkstückrohlings an einem Adapter außerhalb der mindestens einen Werkzeugmaschine beispielsweise an einer Spannstation einer entsprechenden Positioniereinrichtung erfolgt.

Insbesondere ist bei Entladen der mindestens einen Werkzeugmaschine das oder die bearbeiteten Werkstücke an einem Adapter abgestützt. Der Adapter und das oder die Werkstücke sind entspannt voneinander, wobei der Adapter das Werkstück selber abstützt und dadurch hält. Dadurch kann die Adapter-Greifeinrichtung an dem Adapter angreifen und über die Werkstück-Greifeinrichtung kann das entspannte Werkstück von dem Adapter losgelöst und abgeführt werden und damit übernommen werden.

Es kann vorgesehen sein, dass die Adapter-Greifeinrichtung mindestens einen ersten Greifer und einen zweiten Greifer aufweist, wobei mindestens in einem zeitlichen Teilbereich der erste Greifer einen leeren Adapter hält und der zweite Greifer ein mit einem oder mehreren Werkstücken beladenen Adapter hält. Dadurch lassen sich Systemtaktzeiten gering halten und Verfahrwege lassen sich gering halten.

Ganz besonders vorteilhaft ist es, wenn die mindestens eine Werkzeugmaschine durch die Adapter-Greifeinrichtung bezogen auf die Schwerkraftrichtung von oben her beladen wird und/oder entladen wird. Dadurch lassen sich ein Beladungsvorgang und ein Entladungsvorgang effektiv durchführen.

Bei einem Ausführungsbeispiel wird ein Greifer der Adapter-Greifeinrichtung und/oder ein Greifer der Werkstück-Greifeinrichtung in einer horizontalen Richtung und in einer vertikalen Richtung, bezogen auf die Schwerkraftrichtung, verfahren. Dadurch ergibt sich ein effektiver Transport beziehungsweise ein effektives Entladen und Beladen. Es kann insbesondere vorgesehen sein, dass ein Greifer der Adapter-Greifeinrichtung auch noch in einer weiteren horizontalen Richtung verfahrbar ist und dadurch in drei linear unabhängigen Linearrichtungen verfahrbar ist.

Es ist ferner günstig, wenn ein Greifer der Werkstück-Greifeinrichtung um mindestens eine Drehachse gedreht oder geschwenkt wird. Dadurch lässt sich eine Ausrichtung von Werkstücken (als Rohling und/oder bearbeitetes Werkstück) erreichen. Dadurch ergibt sich eine effektive Positionierung an einem Adapter beziehungsweise es lässt sich auf einfache Weise eine Übergabe von der Adapter-Greifeinrichtung an die Werkstück-Greifeinrichtung erreichen.

Die nachfolgende Beschreibung bevorzugter Ausführungsformen dient im Zusammenhang mit den Zeichnungen der näheren Erläuterung der Erfindung. Es zeigen:
- Figur 1: eine schematische Draufsicht auf ein Ausführungsbeispiel eines erfindungsgemäßen Werkzeugmaschinensystems (die Schwerkraftrichtung g liegt senkrecht zur Zeichenebene);
- Figur 2: eine Detailansicht des Werkzeugmaschinensystems gemäß Figur 1 in einem Zuführungsbereich für Werkstücke;
- Figur 3: eine schematische Darstellung eines Ausführungsbeispiels einer Werkzeughalteeinrichtung einer Werkzeugmaschine des Werkzeugmaschinensystems gemäß Figur 1, welche einen Adapter hält, an welchem wiederum ein Werkstück sitzt;
- Figur 4: eine Detailansicht des Werkzeugmaschinensystems gemäß Figur 1 bei einer Werkstückübergabe; und
- Figur 5: eine schematische Darstellung von Greifern bei der Werkstückübergabe nach Bearbeitung des Werkstücks.

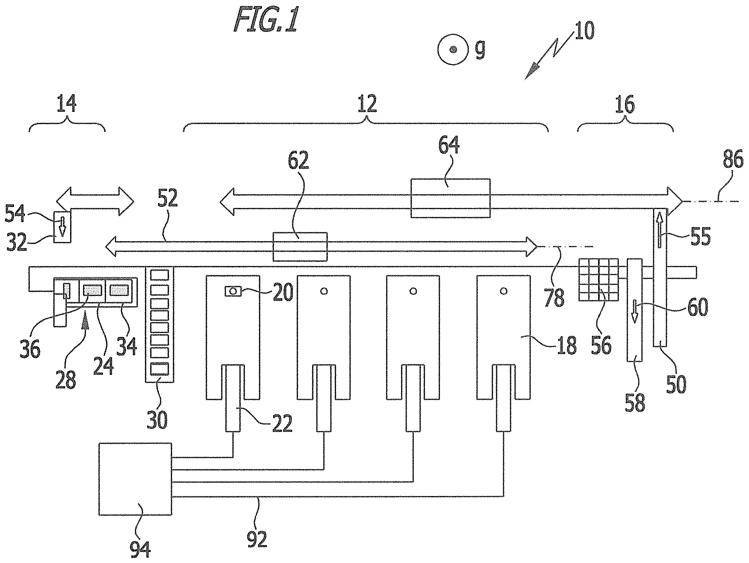

Ein Ausführungsbeispiel eines erfindungsgemäßen Werkzeugmaschinensystems, welches in den Figuren 1 bis 5 gezeigt und dort mit 10 bezeichnet ist, umfasst einen Bearbeitungsbereich 12, einen Zuführungsbereich 14 und einen Abführungsbereich 16. Der Bearbeitungsbereich 12 umfasst eine und insbesondere eine Mehrzahl von Werkzeugmaschinen 18. Die Werkzeugmaschinen 18 sind insbesondere nebeneinander angeordnet.

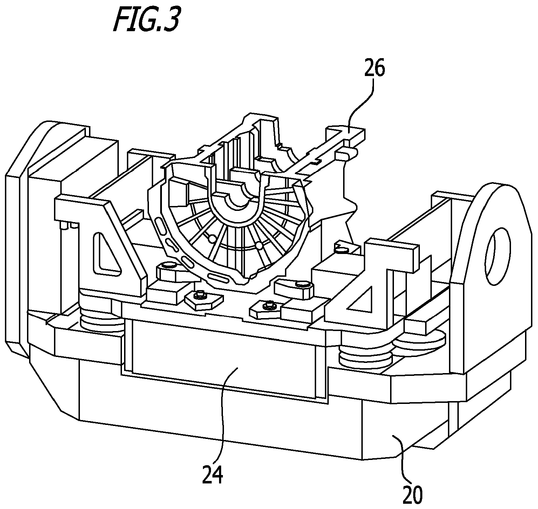

Eine Werkzeugmaschine 18 umfasst eine Werkstückhalteeinrichtung 20 (vgl. auch Figur 3), welche bei der Werkstückbearbeitung von einem oder mehreren Werkstücken das oder die Werkstücke in der Werkzeugmaschine 18 hält. Eine Werkzeugmaschine 18 umfasst ferner eine Werkzeugträgereinrichtung 22, welche bei der Werkstückbearbeitung an der entsprechenden Werkzeugmaschine 18 ein oder mehrere Werkzeuge hält. Die Werkzeugträgereinrichtung 22 umfasst insbesondere eine oder mehrere Werkzeugspindeln.

An einer Werkzeugmaschine 18 erfolgt eine Werkstückbearbeitung insbesondere durch spanabhebende Bearbeitung.

Beispielsweise ist ein Werkstück, welches an einer Werkzeugmaschine 18 bearbeitet wird, ein metallisches Werkstück.

Die Werkzeugmaschinen 18 sind beispielsweise als Bearbeitungszentren ausgebildet. Eine Beweglichkeit der Werkzeugträgereinrichtung 22 bezüglich der Werkstückhalteeinrichtung 20 umfasst Linearachsen und eine oder mehrere Schwenkachsen beziehungsweise Drehachsen. Beispielsweise ist eine relative Beweglichkeit zwischen einem bearbeiteten Werkstück und einem Werkzeug in fünf Achsen realisiert.

Bei der Bearbeitung von Werkstücken an den jeweiligen Werkzeugmaschinen sind diese über einen Adapter 24 (vgl. Figur 3) an der entsprechenden Werkstückhalteeinrichtung 20 gehalten. Bei der Werkstückbearbeitung ist ein Werkstück 26 auf den entsprechenden Adapter 24 aufgespannt. Der Adapter 24 wiederum ist an der Werkstückhalteeinrichtung 20 eingespannt. Der Adapter 24, welcher insbesondere als Adapterplatte (Palette) ausgebildet ist, ermöglicht ohne Umbau oder Austausch der Werkstückhalteeinrichtung 20 die Fixierung von unterschiedlichen Werkstücken an der Werkstückhalteeinrichtung 20. Ein Adapter 24 stellt eine Schnittstelle zwischen Werkstück 26 und der Werkstückhalteeinrichtung 20 bereit.

Über den Zuführungsbereich 14 werden dem Bearbeitungsbereich 12 Werkstückrohlinge zur Bearbeitung bereitgestellt.

Der Zuführungsbereich 14 umfasst eine Positioniereinrichtung 28. An der Positioniereinrichtung 28 werden Werkstückrohlinge an Adaptern 24 positioniert. Insbesondere werden sie dort auch an entsprechenden Adaptern 24 an einer Spannstation fixiert, das heißt mit diesen verspannt.

Der Zuführungsbereich 14 umfasst eine Speichereinrichtung 30, welche Adapter 24 bereithält. Es ist grundsätzlich möglich, dass an der Speichereinrichtung 30 nur leere Adapter 24, nur mit Werkstückrohlingen beladene Adapter 24, oder sowohl leere Adapter 24 als auch beladene Adapter 24 bereitgehalten werden.

Bei einem Ausführungsbeispiel ist der Zuführungsbereich 14 an ein Band 32 angeschlossen, über welches Werkstückrohlinge geliefert werden.

Es kann auch vorgesehen sein, dass der Zuführungsbereich 14 und insbesondere die Positioniereinrichtung 28 eine Reinigungseinrichtung 34 umfasst. An der Reinigungseinrichtung 34 werden insbesondere Adapter 24 beispielsweise durch Spülen gereinigt.

Es kann ferner vorgesehen sein, dass der Zuführungsbereich 14 eine Prägungseinrichtung 36 umfasst, welche beispielsweise eine oder mehrere Schreibeinheiten beispielsweise mit einem Nadelpräger umfasst. An der Prägeeinrichtung 36 wird durch eine entsprechende Schreibeinheit die bearbeitende Werkzeugmaschine 18 und eine Adapternummer (insbesondere nach Fixierung eines Werkstückrohlings an dem entsprechenden Adapter 24) in das Werkstück eingeprägt.

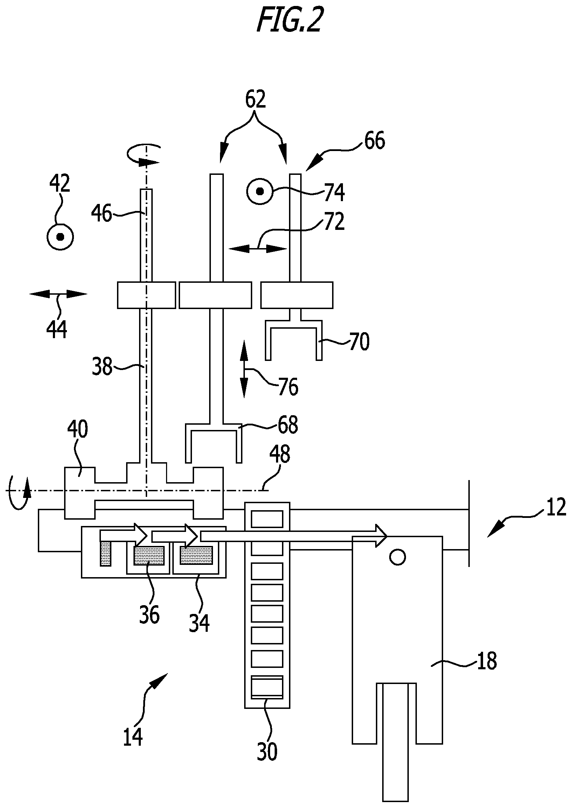

Die Positioniereinrichtung 28 umfasst eine Werkstück-Greifeinrichtung 38 (Figur 2). Diese Werkstück-Greifeinrichtung 38 der Positioniereinrichtung 28 hat mindestens einen Greifer 40. Dieser Greifer 40 ist linear verschieblich in einer Höhenrichtung 42, welche bezogen auf die Schwerkraftrichtung g (in Figur 2 liegt die Schwerkraftrichtung senkrecht zur Zeichenebene) insbesondere eine vertikale Richtung ist. Ferner ist der Greifer 40 in einer linearen Richtung 44 quer und insbesondere senkrecht zur Höhenrichtung 42 verschieblich. Die Linearrichtung 44 ist bezogen auf die Schwerkraftrichtung g insbesondere eine horizontale Richtung.

Es kann ferner vorgesehen sein, dass der Greifer 40 um eine erste Drehachse 46 drehbar oder schwenkbar ist (C-Achse), welche insbesondere quer und vorzugsweise senkrecht zu der Höhenrichtung 42 liegt und quer und insbesondere senkrecht zu der linearen Richtung 44 liegt.

Bei einem Ausführungsbeispiel ist der Greifer 40 um eine zweite Drehachse 48 (Kübelachse) drehbar oder schwenkbar. Die zweite Drehachse 48 liegt beispielsweise parallel zu der linearen Richtung 44.

Durch den Greifer (I-Greifer) der Werkstück-Greifeinrichtung 38 lässt sich ein Werkstückrohling von dem Band 32 aufnehmen und auf einen bereitgehaltenen Adapter 24 aufsetzen, wo er dann insbesondere mit dem Adapter 24 verspannt wird.

Beispielsweise nimmt der Greifer 40 einen Werkstückrohling stirnseitig auf, bewirkt eine Schwenkung um die zweite Drehachse 48 und eine Schwenkung um die erste Drehachse 46. An der Prägeeinrichtung 36 werden dann wie oben beschrieben die entsprechenden Daten an dem Werkstückrohling angebracht. Der Werkstückrohling wird dann auf den Adapter 24 abgesetzt und mit diesem verspannt.

Adapter 24 werden durch die Speichereinrichtung 30 bereitgestellt.

Der Abführungsbereich 16 dient zur Abführung von durch die Werkzeugmaschinen 18 bearbeiteten Werkstücken.

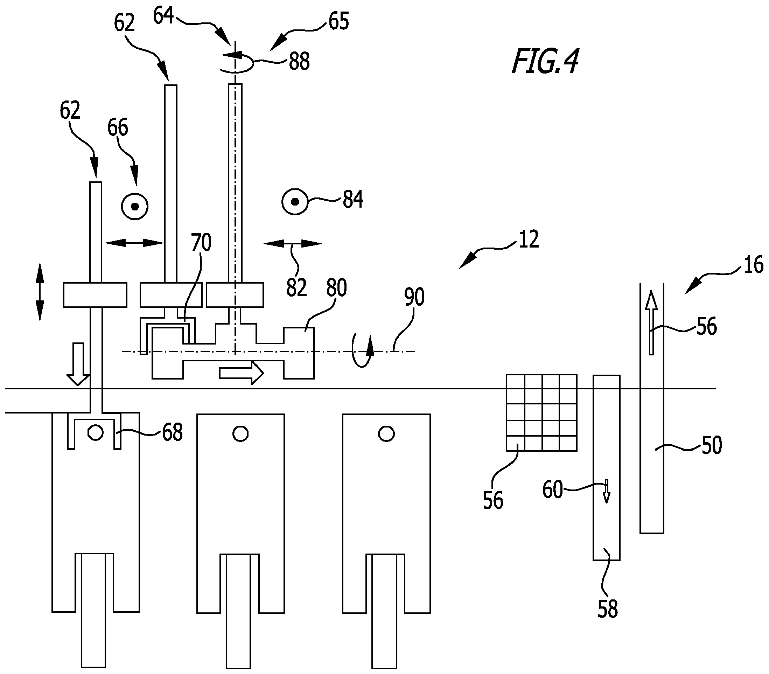

Bei einem Ausführungsbeispiel (Figur 4) umfasst der Abführungsbereich 16 ein Band 50, mittels welchem bearbeitete Werkstücke abgeführt werden und insbesondere zu einer nächsten Bearbeitungseinheit abgeführt werden.

Bei einem Ausführungsbeispiel ist eine Haupttransportrichtung von Werkstücken zwischen dem Zuführungsbereich 14, dem Bearbeitungsbereich 12 und dem Abführungsbereich 16 eine lineare Richtung 52 (vgl. Figur 1). Diese lineare Richtung 52 ist insbesondere parallel zu der linearen Richtung 44.

Bei einem Ausführungsbeispiel liegt eine Zuführungsrichtung 54 des Bands 32 quer zu der linearen Richtung 52 und insbesondere senkrecht zu dieser. Dadurch lässt sich das Werkzeugmaschinensystem 10 kompakt realisieren.

Eine Abführungsrichtung 55 des Bands 50 liegt quer und insbesondere senkrecht zu der linearen Richtung 52, um ein kompaktes Werkzeugmaschinensystem 10 realisieren zu können.

Es kann vorgesehen sein, dass an dem Abführungsbereich 16 und dabei dem Band 50 für bearbeitete Werkstücke vorgeschaltet eine Prüfeinrichtung 56 angeordnet ist, an der bearbeitete Werkstücke geprüft werden. Es kann dabei vorgesehen sein, dass jedes bearbeitete Werkstück geprüft wird oder dass statistisch ausgewählte Werkstücke geprüft werden. Werkstücke, für welche die Prüfung ergab, dass sie Fehler aufweisen, werden einem Ausschleusband 58 übergeben. Eine Ausschleusrichtung 60 liegt dabei insbesondere quer und vorzugsweise senkrecht zu der linearen Richtung 52.

Werkstücke, welche an der Prüfeinrichtung 56 geprüft wurden und die Prüfung "bestehen", werden an das Band 50 übergeben.

Die Werkstück-Greifeinrichtung 38, welche der Positioniereinrichtung 28 zugeordnet ist, sorgt für den Transport von Werkstückrohlingen zwischen dem Band 32 und der Positioniereinrichtung 28. Über die Werkstück-Greifeinrichtung 38 werden Werkstückrohlinge an bereitgestellten Adaptern 24 abgelegt und dort verspannt.

Zur Werkstückkommunikation zwischen dem Zuführungsbereich 14 und dem Bearbeitungsbereich 12, innerhalb des Bearbeitungsbereichs 12 und zwischen dem Bearbeitungsbereich 12 und dem Abführungsbereich 16 ist eine Adapter-Lade-Transporteinrichtung 62 vorgesehen, und ist eine Werkstück-Transporteinrichtung 64 vorgesehen. Die Adapter-Lade-Transporteinrichtung 62 umfasst eine Adapter-Greifeinrichtung 66 (Figuren 2, 4), welche an einem Adapter 24 angreift und diesen fassen und halten kann.

Bei einem Ausführungsbeispiel hat die Adapter-Greifeinrichtung 66 einen ersten Greifer 68 und einen zweiten Greifer 70.

Der erste Greifer 68 und der zweite Greifer 70 sind jeweils in einer ersten Richtung 72 und in einer zweiten Richtung 74 linear beweglich. Die zweite Richtung 74 liegt quer und insbesondere senkrecht zu der ersten Richtung 72. Die erste Richtung 72 liegt insbesondere parallel zu der linearen Richtung 52.

Bei einem Ausführungsbeispiel ist die erste Richtung 72 bezogen auf die Schwerkraftrichtung g eine horizontale Richtung und die zweite Richtung 74 ist eine vertikale Richtung.

Es kann ferner vorgesehen sein, dass der erste Greifer 68 und der zweite Greifer 70 in einer dritten Richtung 76 beweglich sind. Diese dritte Richtung 76 liegt quer und insbesondere senkrecht zu der ersten Richtung 72 und quer und insbesondere senkrecht zu der zweiten Richtung 74. Die dritte Richtung 76 ist insbesondere bezogen auf die Schwerkraftrichtung g eine horizontale Richtung.

Bei einem Ausführungsbeispiel sind der erste Greifer 68 und der zweite Greifer 70 in einem Verbund angeordnet, so dass sie beispielsweise bezüglich einer Beweglichkeit in der ersten Richtung 72 und/oder in der zweiten Richtung 74 miteinander mechanisch verbunden sind oder durch eine entsprechende Softwarelösung in einer Ansteuerung "virtuell" miteinander verbunden sind.

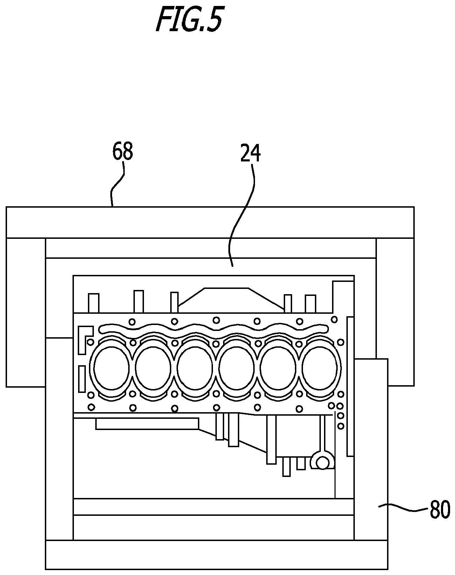

Der erste Greifer 68 und der zweite Greifer 70 sind so ausgebildet, dass sie jeweils an einem Adapter 24 angreifen (siehe Figur 5) und nicht an einem Werkstück. Der erste Greifer 68 beziehungsweise der zweite Greifer 70 kontaktiert den entsprechenden Adapter 24 und spannt diesen ein. Er hält diesen und kann diesen transportieren.

Über die Adapter-Lade-Transporteinrichtung 62 werden Werkstückrohlinge von der Positioniereinrichtung 28 gegriffen. Wie oben bereits erwähnt, erfolgt dabei der Angriff an dem entsprechenden Adapter 24, auf dem das oder die Werkstückrohlinge angeordnet sind.

Über die Adapter-Greifeinrichtung 66 wird dann der Adapter 24 mit dem oder den Werkstückrohlingen in einer ersten Bewegungsachse 78, welche längs einer Abstandsrichtung (in der linearen Richtung 52) zwischen dem Zuführungsbereich 14 und dem Bearbeitungsbereich 12 verläuft und damit in der Abstandsrichtung zwischen der Positioniereinrichtung 28 und der insbesondere in einer Reihe angeordneten Werkzeugmaschinen 18 verläuft, zu der entsprechenden Werkzeugmaschine 18 transportiert.

Der Adapter 24 mit dem oder den Werkstücken wird dann durch die Adapter-Lade-Transporteinrichtung 62 in die entsprechende Werkzeugmaschine 18 geladen. Insbesondere erfolgt eine Beladung der entsprechenden Werkzeugmaschine 18 bezogen auf die Schwerkraftrichtung g von oben her. Dazu fährt der entsprechende Greifer 68 beziehungsweise 70, nachdem er durch Bewegung in der ersten Richtung 72 an der entsprechenden Werkzeugmaschine 18 positioniert ist und durch Bewegung in der zweiten Richtung 74 in der entsprechenden Höhe positioniert ist, in der dritten Richtung 76 über den entsprechenden Arbeitsraum. Es wird dann der entsprechende Greifer 68 oder 70 mit dem mit einem oder mehreren Werkstückrohlingen beladenen Adapter 24 auf die Werkstückhalteeinrichtung 20 von oben her gefahren. Der entsprechende Adapter 24 wird an der Werkstückhalteeinrichtung 20 eingesetzt und dort mit dieser verspannt.

Nach Bearbeitung eines Werkstücks entnimmt der entsprechende Greifer 68 beziehungsweise 70 der Adapter-Lade-Transporteinrichtung 62 den Adapter 24 mit dem oder den bearbeiteten Werkstücken aus der entsprechenden Werkzeugmaschine 18. Dazu wird wiederum ein jetzt leerer Greifer 68 beziehungsweise 70 oberhalb des Arbeitsraums der entsprechenden Werkzeugmaschine 18 positioniert und dann in der Richtung 74 nach unten gefahren. Es wird der entsprechende Adapter 24 (mit dem oder den bearbeiteten Werkstücken) aufgenommen und aus der Werkzeugmaschine 18 herausgefahren.

Es ist dabei insbesondere vorgesehen, dass vor dem Fassen des Adapters 24 durch den entsprechenden Greifer 68 beziehungsweise 70 das oder die bearbeiteten Werkstücke von dem Adapter 24 entspannt werden. Diese Entspannung erfolgt über die Werkstückhalteeinrichtung 20.

Beim Entladen der entsprechenden Werkzeugmaschine 18 durch die Adapter-Lade-Transporteinrichtung 62 sitzen das oder die Werkstücke gewissermaßen lose an dem Adapter 24. Der Greifer 68 beziehungsweise 70 greift an dem Adapter 24 an. Das oder die Werkstücke, welche "lose" an dem Adapter 24 sitzen, werden durch diesen abgestützt. Der Adapter 24 hält das oder die bearbeiteten Werkstücke immer noch, jedoch ohne Einspannung.

Die Werkstück-Transporteinrichtung 64 umfasst bei einem Ausführungsbeispiel einen Greifer 80 (I-Greifer). Dieser Greifer 80 (vgl. auch Figur 5) ist ausgebildet zum Greifen (Fassen) von bearbeiteten Werkstücken. Er ist in einer ersten Richtung 82 und in einer quer dazu liegenden zweiten Richtung 84 linear verschieblich. Die zweite Richtung 84 ist insbesondere senkrecht zur ersten Richtung 82.

Bei einem Ausführungsbeispiel ist die erste Richtung 82 bezogen auf die Schwerkraftrichtung g eine horizontale Richtung und die zweite Richtung 84 eine vertikale Richtung.

Die erste Richtung 82 ist insbesondere parallel zu der linearen Richtung 52. Durch die Beweglichkeit in der ersten Richtung 82 wird für die Werkstück-Transporteinrichtung 64 eine zweite Bewegungsachse 86 definiert. Diese zweite Bewegungsachse 86 ist insbesondere parallel zu der ersten Bewegungsachse 78 der Adapter-Lade-Transporteinrichtung 62.

Bei einem Ausführungsbeispiel ist der Greifer 80 um eine erste Drehachse 88 drehbar oder schwenkbar, welche insbesondere quer und vorzugsweise senkrecht zu der ersten Richtung 82 und der zweiten Richtung 84 liegt.

Ferner ist der Greifer 80 um eine zweite Drehachse 90 schwenkbar beziehungsweise drehbar. Die zweite Drehachse 90 bildet insbesondere eine Kübelachse. Die zweite Drehachse 90 liegt insbesondere parallel zu der ersten Richtung 82.

Es kann auch noch vorgesehen sein, dass der Greifer 80 in einer dritten Richtung senkrecht zur ersten Richtung 82 und senkrecht zur zweiten Richtung 84 linear verschieblich ist. Bei entsprechender Ausbildung der Adapter-Lade-Transporteinrichtung 82 muss eine solche Verschieblichkeit in der dritten Richtung nicht vorgesehen werden.

Der Greifer 80 ist grundsätzlich auf die gleiche Weise ausgebildet wie der Greifer 40 der Werkstück-Greifeinrichtung 38 und weist bei einem Ausführungsbeispiel die gleichen Bewegungsformen auf.

Die Werkstück-Transporteinrichtung 64 dient zum Transport von Werkstücken aus dem Bearbeitungsbereich 12 in den Abführungsbereich 16. Die Adapter-Greifeinrichtung 66 der Adapter-Lade-Transporteinrichtung 62 und der Greifer 80 der Werkstück-Transporteinrichtung 64 weisen einen überlappenden Bewegungsraum auf. Die Werkstück-Transporteinrichtung 64 ist so ausgebildet, dass sie außerhalb der Werkzeugmaschinen 18 durch die Adapter-Greifeinrichtung 66 bereitgestellte Werkstücke entnehmen kann und dem Abführungsbereich 16 durch entsprechende Verschiebung und gegebenenfalls Ausrichtung über Drehung um die erste Drehachse 88 und/oder die zweite Drehachse 90 bereitstellen kann.

Die Adapter-Greifeinrichtung 66 stellt einen Adapter 24 mit einem oder mehreren daran sitzenden bearbeiteten Werkstücken bereit, wobei diese gelöst sind. Der Greifer 80 der Werkstück-Transporteinrichtung 64 fasst dann das oder die entsprechenden bearbeiteten Werkstücke (vgl. Figur 5). Es erfolgt dann eine Entnahme von dem Adapter 24. Die Entnahme erfolgt durch eine relative Bewegung des Greifers 80 zu dem entsprechenden Greifer 68 oder 70, welcher den Adapter hält. Der Greifer 80, welcher das bearbeitete Werkstück hält, führt dieses dann dem Abführungsbereich 16 zu. Die entsprechende Adapter-Greifeinrichtung 66 hält mit dem ersten Greifer 68 oder dem zweiten Greifer 70 einen "leeren", das heißt unbeladenen Adapter. Dieser wird dann durch eine entsprechende Verschiebung des ersten Greifers 68 beziehungsweise des zweiten Greifers 70 dem Zuführungsbereich 14 bereitgestellt. Dort erfolgt (soweit erforderlich) eine Reinigung an der Reinigungseinrichtung 34 und dieser "leere" Adapter 24 kann dann wieder mit einem Werkstückrohling beladen werden.

Bei einem Ausführungsbeispiel weisen die Werkzeugmaschinen 18 des Bearbeitungsbereichs 12 ein Hydrauliksystem 92 auf, welches insbesondere zum Lösen von Werkstücken an Adaptern 24 innerhalb der Werkzeugmaschinen 18 dient, wenn der entsprechende Adapter 24 noch an der jeweiligen Werkstückhalteeinrichtung 20 eingespannt ist. Dieses Hydrauliksystem 92 umfasst insbesondere ein gemeinsames Hydraulikaggregat 94 mit einem entsprechenden Hydraulikölvorrat, über welchen eine Mehrzahl von Werkzeugmaschinen 18 bedient wird.

Durch ein solches "zentrales" Hydraulikaggregat 94 lässt sich ein kompaktes Werkzeugmaschinensystem 10 realisieren.

Das erfindungsgemäße Werkzeugmaschinensystem 10 wird wie folgt betrieben:
An der Positioniereinrichtung 28 werden über die Werkstück-Greifeinrichtung 38 an entsprechenden Adaptern 24 ein oder mehrere Werkstückrohlinge positioniert und insbesondere auch fixiert. Die Positioniereinrichtung 28 umfasst dazu eine entsprechende Spannstation. Durch eine entsprechende Beweglichkeit des Greifers 40 kann neben der Positionierung auch eine entsprechende Ausrichtung verglichen zu einem Anlieferungszustand von Werkstückrohlingen über das Band 32 erfolgen.

Die Adapter-Greifeinrichtung 36 nimmt über einen Greifer (wie beispielsweise) dem Greifer 70, einen "gespannten" Adapter 24 auf, das heißt nimmt einen Adapter 24 auf, an welchem ein oder mehrere Werkstücke eingespannt sind. Der andere Greifer, wie beispielsweise der erste Greifer 68 hält einen "leeren" Adapter, welcher nach der Aufnahme des beladenen Adapters an der Positioniereinrichtung 28 abgegeben wird. Dieser wird an der Reinigungseinrichtung 34 gereinigt, bevor er mit einem Werkstückrohling beladen wird.

Nach der Bearbeitung des oder der Werkstücke an der entsprechenden Werkzeugmaschine 18 holt die Adapter-Greifeinrichtung 66 den entsprechenden Adapter 24 mit dem oder den bearbeiteten Werkstücken aus der entsprechenden Werkzeugmaschine 18. Es wird dabei das oder die bearbeiteten Werkstücke von dem Adapter 24 entspannt, wenn der Adapter 24 noch an der entsprechenden Werkstückhalteeinrichtung 20 der entsprechenden Werkzeugmaschine 18 sitzt. Beim Herausnehmen des Adapters 24 mit entspanntem Werkstück stützt der Adapter 24 das Werkstück ab und hält dieses immer noch, jedoch entspannt.

Die Adapter-Greifeinrichtung 66 stellt außerhalb der entsprechenden Werkzeugmaschine 18 das oder die bearbeiteten Werkstücke, welche noch an dem entsprechenden Adapter 24 angeordnet sind, der Werkstück-Transporteinrichtung mit ihrer Werkstück-Greifeinrichtung 65 mit dem Greifer 80 bereit. Der Greifer 80 greift an dem oder den bearbeiteten Werkstücken an. Durch entsprechende relative Bewegung zwischen dem Greifer 80 und dem entsprechenden Greifer der Adapter-Greifeinrichtung 66 erfolgt ein Abnehmen des oder der bearbeiteten Werkstücke von dem Adapter 24. Das oder die Werkstücke sind dabei an dem Greifer 80 gehalten und durch eine entsprechende Bewegung wird das oder die bearbeiteten Werkstücke dem Abführungsbereich 16 bereitgestellt.

Der entsprechende Greifer der Adapter-Greifeinrichtung 66 hält jetzt einen unbeladenen Adapter 24, welcher durch eine entsprechende Verfahrbewegung wieder der Positioniereinrichtung 28 bereitgestellt wird.

An den Werkzeugmaschinen 18 erfolgt beispielsweise eine Fünf-Achs-Bearbeitung.

Die bearbeiteten Werkstücke sind beispielsweise Zylinderkurbelgehäuse.

Durch die erfindungsgemäße Lösung wird eine flexible Schnittstelle für die Werkstückübergabe bereitgestellt. Es lassen sich kurze Systemtaktzeiten erreichen, wobei Rüstzeitverluste minimierbar sind. Das Ausrichten (über die Werkstück-Greifeinrichtung 38 der Positioniereinrichtung 28) und das Spannen von Werkstückrohlingen an Adaptern 24 erfolgt getrennt von dem Bearbeitungsbereich 12. Die Werkstückübergabe zwischen der Adapter-Lade-Transporteinrichtung 62 und der Werkstück-Transporteinrichtung 64 erfolgt gemäß einem "Shake-Hand-Prinzip". Es lassen sich dadurch kurze Systemtaktzeiten erreichen. Weiterhin lässt sich die Anzahl der notwendigen Adapter 24 gering halten. Grundsätzlich ist kein massiver Umbau der Werkzeugmaschinen 18 notwendig. Es genügt beispielsweise bei dem Ausführungsbeispiel, bei dem ein Entspannen von Werkstücken von Adaptern 24 innerhalb von Werkzeugmaschinen 18 an der entsprechenden Werkstückhalteeinrichtung 20 erfolgt, eine entsprechende Ausbildung der Werkstückhalteeinrichtung 20.

Durch die Verwendung von Adaptern 24 lässt sich das System flexibel an unterschiedliche Werkstücktypen anpassen.

Bei der Ausbildung der Greifer 68, 70, 80 und 40 lässt sich auf existierende Industrielösungen zurückgreifen.

Bezüglich der Systemtaktzeit ist das Beladen und Entladen der Werkzeugmaschinen 18 am kritischsten. Durch Verwendung von mindestens zwei Greifer 68, 70 lassen sich dadurch kurze Systemtaktzeiten erreichen. In der Regel genügt es, nur einen einzigen Greifer 80 vorzusehen, da die Übergabe von bearbeiteten Werkstücken von der Adapter-Greifeinrichtung 66 an die Werkstück-Greifeinrichtung 65 bezüglich der Systemtaktzeiten weniger relevant ist.

### Bezugszeichenliste

- 10: Werkzeugmaschinensystem
- 12: Bearbeitungsbereich
- 14: Zuführungsbereich
- 16: Abführungsbereich
- 18: Werkzeugmaschine
- 20: Werkstückhalteeinrichtung
- 22: Werkzeugträgereinrichtung
- 24: Adapter
- 26: Werkstück
- 28: Positioniereinrichtung
- 30: Speichereinrichtung
- 32: Band
- 34: Reinigungseinrichtung
- 36: Prägeeinrichtung
- 38: Werkstück-Greifeinrichtung
- 40: Greifer
- 42: Höhenrichtung
- 44: Lineare Richtung
- 46: Erste Drehachse
- 48: Zweite Drehachse
- 50: Band
- 52: Lineare Richtung
- 54: Zuführungsrichtung
- 55: Abführungsrichtung
- 56: Prüfeinrichtung
- 58: Ausschleusband
- 60: Ausschleusrichtung
- 62: Adapter-Lade-Transporteinrichtung
- 64: Werkstück-Transporteinrichtung
- 65: Werkstück-Greifeinrichtung der Werkstück-Transporteinrichtung
- 66: Adapter-Greifeinrichtung
- 68: Erster Greifer
- 70: Zweiter Greifer
- 72: Erste Richtung
- 74: Zweite Richtung
- 76: Dritte Richtung
- 78: Erste Bewegungsachse
- 80: Greifer
- 82: Erste Richtung
- 84: Zweite Richtung
- 86: Zweite Bewegungsachse
- 88: Erste Drehachse
- 90: Zweite Drehachse
- 92: Hydrauliksystem
- 94: Hydraulikaggregat

## Patentansprüche

1. Werkzeugmaschinensystem, umfassend
- mindestens eine Werkzeugmaschine (18) zur Bearbeitung von Werkstücken, mit einer Werkstückhalteeinrichtung (20), wobei bei einer Werkstückbearbeitung ein oder mehrere Werkstücke über einen Adapter (24) an der Werkstückhalteeinrichtung (20) gehalten sind,
- eine Positioniereinrichtung (28), welche Werkstückrohlinge an Adaptern (24) positioniert,
- eine Adapter-Lade-Transporteinrichtung (62) mit einer Adapter-Greifeinrichtung (66), welche an Adaptern (24) angreift, wobei die Adapter-Lade-Transporteinrichtung (62) mit Werkstückrohlingen versehene Adapter (24) von der Positioniereinrichtung (28) zu der mindestens einen Werkzeugmaschine (18) bringt, die mindestens eine Werkzeugmaschine (18) belädt und mit einem oder mehreren bearbeiteten Werkstücken versehene Adapter (24) von der mindestens einen Werkzeugmaschine (18) entlädt, und
- eine Werkstück-Transporteinrichtung (64) mit einer Werkstück-Greifeinrichtung (65), welche an Werkstücken angreift, wobei die Werkstück-Transporteinrichtung (64) bearbeitete Werkstücke nach Entladung an der mindestens einen Werkzeugmaschine (18) durch die Adapter-Lade-Transporteinrichtung (62) von der Adapter-Lade-Transporteinrichtung (62) übernimmt und abführt,
**dadurch gekennzeichnet, dass** die Werkstückhalteeinrichtung (20) ein Lösesystem zum Lösen einer Spannung von einem oder mehreren bearbeiteten Werkstücken an einem Adapter (24) umfasst und/oder ein Spannsystem zum Spannen eines oder mehrerer Werkstücke an dem Adapter (24) umfasst, wobei bearbeitete Werkstücke, welche an Adaptern (24) positioniert sind, innerhalb der mindestens einen Werkzeugmaschine (18) von dem Adapter (24) entspannbar sind und/oder Werkstücke, welche an Adaptern (24) positioniert sind, innerhalb der Werkzeugmaschine (18) an den Adaptern spannbar sind.

2. Werkzeugmaschinensystem nach Anspruch 1, **dadurch gekennzeichnet, dass** die Werkstück-Transporteinrichtung (64) bearbeitete Werkstücke außerhalb der mindestens einen Werkzeugmaschine (18) von der Adapter-Lade-Transporteinrichtung (62) übernimmt.

3. Werkzeugmaschinensystem nach Anspruch 1 oder 2, **dadurch gekennzeichnet, dass** die Adapter-Greifeinrichtung (66) mindestens zwei Greifer (68, 70) umfasst, und insbesondere dass die mindestens zwei Greifer (68, 70) miteinander verbunden sind und gemeinsam bewegt sind.

4. Werkzeugmaschinensystem nach einem der vorangehenden Ansprüche, **dadurch gekennzeichnet, dass** ein Greifer (68, 70) der Adapter-Greifeinrichtung (66) eine Linearbeweglichkeit in einer ersten Richtung (72) aufweist und in einer zweiten Richtung (74) quer zur ersten Richtung (72) aufweist, und insbesondere dass die erste Richtung (72) bezogen auf die Schwerkraftrichtung (g) eine horizontale Richtung ist, und insbesondere dass die zweite Richtung (74) bezogen auf die Schwerkraftrichtung (g) eine vertikale Richtung ist.

5. Werkzeugmaschinensystem nach einem der vorangehenden Ansprüche, **dadurch gekennzeichnet, dass** die Werkstück-Greifeinrichtung (65) der Werkstück-Transporteinrichtung (64) mindestens einen Greifer (80) umfasst.

6. Werkzeugmaschinensystem nach einem der vorangehenden Ansprüche, **dadurch gekennzeichnet, dass** die Positioniereinrichtung (28) eine Werkstück-Greifeinrichtung (38) mit mindestens einem Greifer (40) umfasst, welcher an Werkstückrohlingen angreift, und insbesondere dass ein Greifer (80; 40) der Werkstück-Transporteinrichtung (64) und/oder der Positioniereinrichtung (28) in einer ersten Richtung (82) und in einer zweiten Richtung (84) quer zur ersten Richtung (82) linear verschieblich ist, und insbesondere dass ein Greifer (80; 40) der Werkstück-Transporteinrichtung (64) und/oder der Positioniereinrichtung (28) um eine erste Drehachse (46; 88) schwenkbar oder drehbar ist, und insbesondere dass der Greifer (80; 40) der Werkstück-Transporteinrichtung (64) und/oder der Positioniereinrichtung (28) um eine zweite Drehachse (48; 90) schwenkbar oder drehbar ist, welche verschieden von der ersten Drehachse (46; 88) ist und insbesondere quer zu dieser orientiert ist.

7. Werkzeugmaschinensystem nach einem der vorangehenden Ansprüche, **dadurch gekennzeichnet, dass** die Adapter-Greifeinrichtung (66) eine erste Bewegungsachse (78) aufweist, welche entlang einer Abstandsrichtung zwischen der Positioniereinrichtung (28) und der mindestens einen Werkzeugmaschine (18) liegt.

8. Werkzeugmaschinensystem nach einem der vorangehenden Ansprüche, **dadurch gekennzeichnet, dass** die Werkstück-Greifeinrichtung (65) der Werkstück-Transporteinrichtung (64) eine zweite Bewegungsachse (86) aufweist, welche entlang einer Abstandsrichtung zwischen der mindestens einen Werkzeugmaschine (18) und einer Abführungseinrichtung (16) für bearbeitete Werkstücke liegt, und insbesondere dass die zweite Bewegungsachse (86) parallel zu einer ersten Bewegungsachse (78) der Adapter-Greifeinrichtung (66) liegt.

9. Werkzeugmaschinensystem nach einem der vorangehenden Ansprüche, **dadurch gekennzeichnet, dass** die Werkstück-Greifeinrichtung (65) der Werkstück-Transporteinrichtung (64) einen Bewegungsraum aufweist, welcher in einem Bewegungsraum der Adapter-Greifeinrichtung (66) liegt, um bearbeitete Werkstücke von der Adapter-Greifeinrichtung (66) an die Werkstück-Greifeinrichtung (65) zu übergeben.

10. Werkzeugmaschinensystem nach einem der vorangehenden Ansprüche, **gekennzeichnet durch** eine Mehrzahl von Werkzeugmaschinen (18), und insbesondere dass ein Hydrauliksystem (92) für die Werkzeugmaschinen (18) vorgesehen ist, und insbesondere dass ein gemeinsames Hydraulikaggregat (94) für die Werkzeugmaschinen (18) vorgesehen ist, und insbesondere dass Werkstückhalteeinrichtungen (20) der Werkzeugmaschinen (18) an das Hydrauliksystem (92) angeschlossen sind.

11. Werkzeugmaschinensystem nach einem der vorangehenden Ansprüche, **gekennzeichnet durch**:
eine Speichereinrichtung (30) für Adapter (24), welche Adapter (24) der Positioniereinrichtung (28) bereitstellt, wobei insbesondere die Speichereinrichtung (30) zwischen der Positioniereinrichtung (28) und der mindestens einen Werkzeugmaschine (18) angeordnet ist, und wobei insbesondere die Speichereinrichtung (30) durch die Adapter-Lade-Transporteinrichtung (62) anfahrbar ist, und/oder
eine Reinigungseinrichtung (34) für Adapter (24), wobei insbesondere die Reinigungseinrichtung (34) durch die Adapter-Lade-Transporteinrichtung (62) anfahrbar ist, und/oder
eine Prüfeinrichtung (56) für bearbeitete Werkstücke und/oder eine Ausschleuseinrichtung (58) für bearbeitete Werkstücke, wobei insbesondere die Prüfeinrichtung (56) und/oder die Ausschleuseinrichtung (58) durch die Werkstück-Transporteinrichtung (64) anfahrbar ist.

12. Verfahren zum Betreiben eines Werkzeugmaschinensystems, welches mindestens eine Werkzeugmaschine (18) umfasst, wobei bei einer Werkstückbearbeitung an der mindestens einen Werkzeugmaschine (18) ein oder mehrere Werkstücke über einen Adapter (24) an einer Werkstückhalteeinrichtung (20) gehalten werden, umfassend:
Greifen eines mit einem oder mehreren Werkstückrohlingen versehenen Adapters (24) durch eine Adapter-Greifeinrichtung (66);
Zuführen des Adapters (24) zu der mindestens einen Werkzeugmaschine (18) durch die Adapter-Greifeinrichtung (66);
Beladen der mindestens einen Werkzeugmaschine (18) mit dem Adapter (24) durch die Adapter-Greifeinrichtung (66) und nach der Werkstückbearbeitung Entladung der mindestens einen Werkzeugmaschine (18) durch Greifen des Adapters (24) durch die Adapter-Greifeinrichtung (66), wobei das Werkstück oder die Werkstücke nach der Bearbeitung innerhalb der mindestens einen Werkzeugmaschine (18) von dem Adapter (24) entspannt werden;
Greifen des oder der bearbeiteten Werkstücke, welche an dem Adapter (24) sitzen, wobei der Adapter (24) durch die Adapter-Greifeinrichtung (66) gehalten wird, von einer Werkstück-Greifeinrichtung (65);
Übernahme des oder der Werkstücke von der Adapter-Greifeinrichtung (66); und
Abführung des Werkstücks oder der Werkstücke mit der Werkstück-Greifeinrichtung (65).

13. Verfahren nach Anspruch 12, **dadurch gekennzeichnet, dass** die Werkstück-Greifeinrichtung (65) das oder die bearbeiteten Werkstücke außerhalb der mindestens einen Werkzeugmaschine (18) übernimmt.

14. Verfahren nach Anspruch 12 oder 13, **dadurch gekennzeichnet, dass** bei Entladen der mindestens einen Werkzeugmaschine (18) das oder die bearbeiteten Werkstücke an dem Adapter (24) abgestützt sind.

15. Verfahren nach einem der Ansprüche 12 bis 14, **dadurch gekennzeichnet, dass** die mindestens eine Werkzeugmaschine (18) durch die Adapter-Greifeinrichtung (66) bezogen auf die Schwerkraftrichtung (g) von oben her beladen wird und/oder entladen wird.

16. Verfahren nach einem der Ansprüche 12 bis 15, **dadurch gekennzeichnet, dass** ein Greifer (68; 70) der Adapter-Greifeinrichtung (66) und/oder ein Greifer (80) der Werkstück-Greifeinrichtung (65) in einer horizontalen Richtung (82) und in einer vertikalen Richtung (84), bezogen auf die Schwerkraftrichtung (g), verfahren wird, und/oder dass ein Greifer (80) der Werkstück-Greifeinrichtung (65) um mindestens eine Drehachse (88; 90) gedreht oder geschwenkt wird.

## Claims

1. Machine tool system, comprising:
- at least one machine tool (18) for machining workpieces, having a workpiece holding device (20), wherein, during workpiece machining, one or more workpieces are held on the workpiece holding device (20) by way of an adapter (24);
- a positioning device (28) that positions workpiece blanks on adapters (24),
- an adapter loading and transporting device (62), having an adapter gripping device (66) that acts on adapters (24), wherein the adapter loading and transporting device (62) moves adapters (24) that are provided with workpiece blanks from the positioning device (28) to the at least one machine tool (18), loads the at least one machine tool (18) and unloads adapters (24) that are provided with one or more machined workpieces from the at least one machine tool (18), and
- a workpiece transporting device (64), having a workpiece gripping device (65) that acts on workpieces, wherein, after machined workpieces have been unloaded at the at least one machine tool (18) by the adapter loading and transporting device (62), the workpiece transporting device (64) takes them up from the adapter loading and transporting device (62) and removes them,
**characterized in that** the workpiece holding device (20) comprises a release system for releasing clamping of one or more machined workpieces on an adapter (24), and/or a clamping system for clamping one or more workpieces on the adapter (24), wherein machined workpieces that are positioned on adapters (24) are unclampable from the adapter (24) within the at least one machine tool (18) and/or workpieces that are positioned on adapters (24) are clampable on the adapters within the machine tool (18).

2. Machine tool system according to claim 1, **characterized in that** the workpiece transporting device (64) takes up machined workpieces from the adapter loading and transporting device (62) outside the at least one machine tool (18).

3. Machine tool system according to claim 1 or 2, **characterized in that** the adapter gripping device (66) includes at least two grippers (68, 70), and in particular **in that** the at least two grippers (68, 70) are connected to one another and moved together.

4. Machine tool system according to any one of the preceding claims, **characterized in that** a gripper (68, 70) of the adapter gripping device (66) is linearly movable in a first direction (72) and is linearly movable in a second direction (74) transverse to the first direction (72), and in particular **in that** the first direction (72) is a horizontal direction, in relation to the direction of gravity (g), and in particular **in that** the second direction (74) is a vertical direction, in relation to the direction of gravity (g).

5. Machine tool system according to any one of the preceding claims, **characterized in that** the workpiece gripping device (65) of the workpiece transporting device (64) includes at least one gripper (80).

6. Machine tool system according to any one of the preceding claims, **characterized in that** the positioning device (28) includes a workpiece gripping device (38) having at least one gripper (40) that acts on workpiece blanks, and in particular **in that** a gripper (80; 40) of the workpiece transporting device (64) and/or the positioning device (28) is linearly displaceable in a first direction (82) and in a second direction (84) transverse to the first direction (82), and in particular **in that** a gripper (80; 40) of the workpiece transporting device (64) and/or the positioning device (28) is pivotal or rotatable about a first axis of rotation (46; 88), and in particular **in that** the gripper (80; 40) of the workpiece transporting device (64) and/or the positioning device (28) is pivotal or rotatable about a second axis of rotation (48; 90) which is different from the first axis of rotation (46; 88) and is in particular oriented transversely to same.

7. Machine tool system according to any one of the preceding claims, **characterized in that** the adapter gripping device (66) has a first movement axis (78) that lies in the direction of a spacing between the positioning device (28) and the at least one machine tool (18).

8. Machine tool system according to any one of the preceding claims, **characterized in that** the workpiece gripping device (65) of the workpiece transporting device (64) has a second movement axis (86) that lies in the direction of a spacing between the at least one machine tool (18) and a device (16) for removing machined workpieces, and in particular **in that** the second movement axis (86) lies parallel to a first movement axis (78) of the adapter gripping device (66).

9. Machine tool system according to any one of the preceding claims, **characterized in that** the workpiece gripping device (65) of the workpiece transporting device (64) has a movement space that lies in a movement space of the adapter gripping device (66), in order to transfer machined workpieces from the adapter gripping device (66) to the workpiece gripping device (65).

10. Machine tool system according to any one of the preceding claims, **characterized in that** a plurality of machine tools (18) are provided, and in particular **in that** a hydraulic system (92) is provided for the machine tools (18), and in particular **in that** a common hydraulic unit (94) is provided for the machine tools (18), and in particular **in that** workpiece holding devices (20) of the machine tools (18) are connected to the hydraulic system (92).

11. Machine tool system according to any one of the preceding claims, **characterized by**:
a storage device (30) for adapters (24) that holds adapters (24) ready for the positioning device (28), in particular wherein the storage device (30) is arranged between the positioning device (28) and the at least one machine tool (18), and in particular wherein the storage device (30) is approachable by the adapter loading and transporting device (62), and/or
a cleaning device (34) for adapters (24), in particular wherein the cleaning device (34) is approachable by the adapter loading and transporting device (62), and/or
a testing device (56) for machined workpieces and/or an ejection device (58) for machined workpieces, in particular wherein the testing device (56) and/or the ejection device 58) is approachable by the workpiece transporting device (64).

12. Method for operating a machine tool system that includes at least one machine tool (18), wherein, during workpiece machining at the at least one machine tool (18), one or more workpieces are held on a workpiece holding device (20) by way of an adapter (24), comprising:
gripping an adapter (24), which is provided with one or more workpiece blanks, by an adapter gripping device (66);
supplying the adapter (24) to the at least one machine tool (18), by the adapter gripping device (66);
loading the at least one machine tool (18) with the adapter (24), by the adapter gripping device (66), and after workpiece machining unloading the at least one machine tool (18), in that the adapter gripping device (66) grips the adapter (24), wherein, after machining, the workpiece or workpieces is/are unclamped from the adapter (24) within the at least one machine tool (18);
gripping the machined workpiece or workpieces that are seated on the adapter (24), wherein the adapter (24) is held by the adapter gripping device (66), by a workpiece gripping device (65);
taking up the workpiece or workpieces from the adapter gripping device (66); and
removing the workpiece or workpieces by means of the workpiece gripping device (65).

13. Method according to claim 12, **characterized in that** the workpiece gripping device (65) takes up the machined workpiece or workpieces outside the at least one machine tool (18).

14. Method according to claim 12 or 13, **characterized in that**, on unloading of the at least one machine tool (18), the machined workpiece or workpieces is/are supported on the adapter (24).

15. Method according to any one of claims 12 to 14, **characterized in that** the at least one machine tool (18) is loaded and/or unloaded by the adapter gripping device (66) from above, in relation to the direction of gravity (g).

16. Method according to any one of claims 12 to 15, **characterized in that** a gripper (68; 70) of the adapter gripping device (66) and/or a gripper (80) of the workpiece gripping device (65) is moved in a horizontal direction (82) and a vertical direction (84), in relation to the direction of gravity (g), and/or **in that** a gripper (80) of the workpiece gripping device (65) is rotated or pivoted about at least one axis of rotation (88; 90).

## Revendications

1. Système de machine-outil, comprenant
- au moins une machine-outil (18) pour l'usinage de pièces, avec un dispositif de retenue de pièce (20), dans lequel, lors d'un usinage de pièce, une ou plusieurs pièces sont retenues sur le dispositif de retenue de pièce (20) par l'intermédiaire d'un adaptateur (24),
- un dispositif de positionnement (28), lequel positionne des ébauches de pièce sur les adaptateurs (24),
- un dispositif de transport et de chargement d'adaptateur (62) avec un dispositif de préhension d'adaptateur (66), lequel saisit les adaptateurs (24), dans lequel le dispositif de transport et de chargement d'adaptateur (62) amène les adaptateurs (24) pourvus d'ébauches de pièce à partir du dispositif de positionnement (28) vers la au moins une machine-outil (18), charge la au moins une machine-outil (18) et décharge les adaptateurs (24) pourvus d'une ou plusieurs pièces usinées de la au moins une machine-outil (18), et
- un dispositif de transport de pièce (64) avec un dispositif de préhension de pièce (65), lequel saisit des pièces, dans lequel le dispositif de transport de pièce (64) réceptionne du dispositif de transport et de chargement d'adaptateur (62) les pièces usinées après déchargement sur la au moins une machine-outil (18) par le dispositif de transport et de chargement d'adaptateur (62) et les emmène,
**caractérisé en ce que** le dispositif de retenue de pièce (20) comprend un système de libération pour libérer un serrage d'une ou plusieurs pièces usinées sur un adaptateur (24) et/ou un système de serrage pour serrer une ou plusieurs pièces sur l'adaptateur (24), dans lequel les pièces usinées, lesquelles sont positionnées sur les adaptateurs (24), peuvent être desserrées de l'adaptateur (24) à l'intérieur de la au moins une machine-outil (18) et/ou des pièces, lesquelles sont positionnées sur les adaptateurs (24), peuvent être serrées sur les adaptateurs (24) à l'intérieur de la machine-outil (18).

2. Système de machine-outil selon la revendication 1, **caractérisé en ce que** le dispositif de transport de pièce (64) réceptionne du dispositif de transport et de chargement d'adaptateur (62) les pièces usinées à l'extérieur de la au moins une machine-outil (18).

3. Système de machine-outil selon la revendication 1 ou 2, **caractérisé en ce que** le dispositif de préhension d'adaptateur (66) comprend au moins deux éléments de préhension (68, 70), et en particulier que les au moins deux éléments de préhension (68, 70) sont reliés l'un à l'autre et sont déplacés conjointement.

4. Système de machine-outil selon l'une quelconque des revendications précédentes, **caractérisé en ce qu'**un élément de préhension (68, 70) du dispositif de préhension d'adaptateur (66) présente une mobilité linéaire dans une première direction (72) et dans une deuxième direction (74) transversale par rapport à la première direction (72), et en particulier que la première direction (72), par rapport au sens de la pesanteur (g), est une direction horizontale, et en particulier que la deuxième direction (74), par rapport au sens de la pesanteur (g), est une direction verticale.

5. Système de machine-outil selon l'une quelconque des revendications précédentes, **caractérisé en ce que** le dispositif de préhension de pièce (65) du dispositif de transport de pièce (64) comprend au moins un élément de préhension (80).

6. Système de machine-outil selon l'une quelconque des revendications précédentes, **caractérisé en ce que** le dispositif de positionnement (28) comprend un dispositif de préhension de pièce (38) avec au moins un élément de préhension (40), lequel saisit des ébauches de pièces, et en particulier qu'un élément de préhension (80 ; 40) du dispositif de transport de pièce (64) et/ou du dispositif de positionnement (28) est mobile linéairement dans une première direction (82) et dans une deuxième direction (84) transversale par rapport à la première direction (82), et en particulier qu'un élément de préhension (80 ; 40) du dispositif de transport de pièce (64) et/ou du dispositif de positionnement (28) peut pivoter ou être amené en rotation autour d'un premier axe (46 ; 88), et en particulier que l'élément de préhension (80 ; 40) du dispositif de transport de pièce (64) et/ou du dispositif de positionnement (28) peut pivoter ou être amené en rotation autour d'un deuxième axe de rotation (48 ; 90), lequel est différent du premier axe de rotation (46 ; 88) et en particulier orienté transversalement par rapport à celui-ci.

7. Système de machine-outil selon l'une quelconque des revendications précédentes, **caractérisé en ce que** le dispositif de préhension d'adaptateur (66) présente un premier axe de mouvement (78), lequel se situe le long d'une direction d'espacement entre le dispositif de positionnement (28) et la au moins une machine-outil (18) .

8. Système de machine-outil selon l'une quelconque des revendications précédentes, **caractérisé en ce que** le dispositif de préhension de pièce (65) du dispositif de transport de pièce (64) présente un deuxième axe de mouvement (86), lequel se situe le long d'une direction d'espacement entre la au moins une machine-outil (18) et un dispositif d'emmenée (16) pour les pièces usinées, et en particulier que le deuxième axe de mouvement (86) se situe parallèlement à un premier axe de mouvement (78) du dispositif de préhension d'adaptateur (66).

9. Système de machine-outil selon l'une quelconque des revendications précédentes, **caractérisé en ce que** le dispositif de préhension de pièce (65) du dispositif de transport de pièce (64) présente un espace de mouvement, lequel se situe dans un espace de mouvement du dispositif de préhension d'adaptateur (66), afin de transférer les pièces usinées du dispositif de préhension d'adaptateur (66) sur le dispositif de préhension de pièce (65).

10. Système de machine-outil selon l'une quelconque des revendications précédentes, **caractérisé par** une pluralité de machines-outils (18), et en particulier qu'un système hydraulique (92) pour les machines-outils (18) est prévu, et en particulier qu'un système hydraulique (94) commun pour les machines-outils (18) est prévu, et en particulier que des dispositifs de retenue de pièce (20) des machines-outils (18) sont raccordés au système hydraulique (92).

11. Système de machine-outil selon l'une quelconque des revendications précédentes, **caractérisé par** :
un dispositif de stockage (30) pour les adaptateurs (24), lesquels adaptateurs (24) sont fournis au dispositif de positionnement (28), dans lequel en particulier le dispositif de stockage (30) est disposé entre le dispositif de positionnement (28) et la au moins une machine-outil (18), et dans lequel en particulier le dispositif de stockage (30) peut être atteint par le dispositif de transport et de chargement d'adaptateur (62), et/ou
un dispositif de nettoyage (34) pour les adaptateurs (24), dans lequel en particulier le dispositif de nettoyage (34) peut être atteint par le dispositif de transport et de chargement d'adaptateur (62), et/ou
un dispositif de contrôle (56) pour les pièces usinées et/ou un dispositif d'évacuation (58) pour les pièces usinées, dans lequel en particulier le dispositif de contrôle (56) et/ou le dispositif d'évacuation (58) peuvent être atteints par le dispositif de transport de pièce (64).

12. Procédé pour faire fonctionner un système de machine-outil, lequel comprend au moins une machine-outil (18), dans lequel, lors d'un usinage de pièce sur la au moins une machine-outil (18), une ou plusieurs pièces sont retenues sur un dispositif de retenue de pièce (20) par l'intermédiaire d'un adaptateur (24), comprenant :
la préhension d'un adaptateur (24) pourvu d'une ou plusieurs ébauches de pièce par un dispositif de préhension d'adaptateur (66) ;
l'amenée de l'adaptateur (24) à la au moins une machine-outil (18) par le dispositif de préhension d'adaptateur (66) ;
le chargement de la au moins une machine-outil (18) avec l'adaptateur (24) par le dispositif de préhension d'adaptateur (66) et après l'usinage de la pièce, le déchargement de la au moins une machine-outil (18) par préhension de l'adaptateur (24) par le dispositif de préhension d'adaptateur (66), dans lequel la pièce ou les pièces, après l'usinage, sont desserrées de l'adaptateur (24) à l'intérieur de la au moins une machine-outil (18) ;
la préhension de la ou des pièces usinées, lesquelles reposent sur l'adaptateur (24), dans lequel l'adaptateur (24) est retenu par le dispositif de préhension d'adaptateur (66), par un dispositif de préhension de pièce (65) ;
la réception de la ou des pièces par le dispositif de préhension d'adaptateur (66) ; et
l'emmenée de la pièce ou des pièces avec le dispositif de préhension de pièce (65).

13. Procédé selon la revendication 12, **caractérisé en ce que** le dispositif de préhension de pièce (65) réceptionne la ou les pièces usinées à l'extérieur de la au moins une machine-outil (18).

14. Procédé selon la revendication 12 ou 13, **caractérisé en ce que**, lors du déchargement de la au moins une machine-outil (18), la ou les pièces usinées sont en appui sur l'adaptateur (24).

15. Procédé selon l'une quelconque des revendications 12 à 14, **caractérisé en ce que** la au moins une machine-outil (18) est chargée et/ou déchargée par le haut par rapport au sens de la pesanteur (g) par le dispositif de préhension d'adaptateur (66).

16. Procédé selon l'une quelconque des revendications 12 à 15, **caractérisé en ce qu'**un élément de préhension (68 ; 70) du dispositif de préhension d'adaptateur (66) et/ou un élément de préhension (80) du dispositif de préhension de pièce (65) sont déplacés dans une direction horizontale (82) et dans une direction verticale (84), par rapport au sens de la pesanteur (g), et/ou qu'un élément de préhension (80) du dispositif de préhension de pièce (65) est amené en rotation ou à pivoter autour d'au moins un axe de rotation (88 ; 90).
